(19) Europäisches Patentamt
European Patent Office
Office européen des brevets

(11) EP 0 914 370 B1

(12) EUROPEAN PATENT SPECIFICATION

(45) Date of publication and mention of the grant of the patent:
**17.11.2004 Bulletin 2004/47**

(21) Application number: **97937025.1**

(22) Date of filing: **23.07.1997**

(51) Int Cl.[7]: **C08J 9/14**

(86) International application number:
**PCT/US1997/013074**

(87) International publication number:
**WO 1998/003581 (29.01.1998 Gazette 1998/04)**

# (54) PROCESS FOR PRODUCING CLOSED CELL THERMOPLASTIC FOAMS CONTAINING HFC-134

VERFAHREN ZUR HERSTELLUNG VON HCF-134 ENTHALTENDEN GESCHLOSSENZELLIGEN THERMOPLASTSCHAUMSTOFFEN

PROCEDE DE PREPARATION DES MOUSSES THERMOPLASTIQUES A ALVEOLES FERMEES CONTENANT HFC-134

(84) Designated Contracting States:
**DE FR GB IT NL**

(30) Priority: **24.07.1996 US 22575 P**

(43) Date of publication of application:
**12.05.1999 Bulletin 1999/19**

(73) Proprietor: **E.I. DU PONT DE NEMOURS AND COMPANY**
**Wilmington, Delaware 19898 (US)**

(72) Inventors:
- **CREAZZO, Joseph, Anthony**
  **Wilmington, DE 19810 (US)**
- **HAMMEL, Howard, S.**
  **Bear, DE 19701 (US)**
- **YORK, Robert, O.**
  **Wilmington, DE 19808 (US)**

(74) Representative: **Matthews, Derek Peter et al**
**Frank B. Dehn & Co.,**
**European Patent Attorneys,**
**179 Queen Victoria Street**
**London EC4V 4EL (GB)**

(56) References cited:
**EP-A- 0 515 125**
**WO-A-92/17558**
**WO-A-93/09199**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 914 370 B1

Printed by Jouve, 75001 PARIS (FR)

## Description

The instant invention relates to using HFC-134 (1,1,2,2-tetrafluoroethane) in the production of styrenic thermoplastic foams.

In general, thermoplastic foams are manufactured by mixing a volatile blowing agent with a molten thermoplastic resin under controlled conditions of temperature and pressure sufficient to form a plasticized, resin-blowing agent mixture and maintain the mixture in an unfoamed state. Thereafter, the mixture is extruded through a suitable die into a zone of lower pressure at a controlled temperature to obtain a substantially closed cell structure having a desired shape and form.

For satisfactory production of closed cell foams, the blowing agent's solubility should be sufficiently high, while the mixture is passing through the die into the lower pressure expansion zone, so that expansion proceeds smoothly to the closed cell state. Otherwise, if the solubility is too low the blowing agent vaporizes away prematurely - and so rapidly and to such an extent before the cell walls fully form - that the resulting foam contains a high proportion of ruptured cells (voids), which adversely affects the foam's utility, e.g., as insulating or load-bearing structural material. The blowing agents solubility in the resin is particularly critical when extruding through large cross-sectional dies. This is because the throughput of the extruding mixture is generally fixed in conventionally employed extruders and the back-pressure at the lip (opening) is low. The larger the area of the die opening the lower is the back-pressure exerted on the mixture and the greater is the number of voids in the resulting foam.

There are many conventional methods for making thermoplastic foams. Siraux et al, European Patent Application No. 0 406 206 A2 discloses polystyrenic foams and a method of making them involving a mixture of blowing agents comprising dichloromethane and one or more of a hydrochlorofluorocarbon (HCFC), a hydrofluorocarbon (HFC) and a fluorocarbon (FC), with dichloromethane comprising 5 to 25 weight percent of the mixture. The disclosed system has the disadvantage of utilizing and requiring environmentally objectionable (e.g., ozone depleting) chloro-containing volatile substances as part of the blowing agent composition.

Suh et al, Canadian Patent No.1,086,450, relates to polystyrenic closed cell insulating foams and their preparation, utilize a mixture of high permeability and low permeability blowing agents for foam production. These foams are undesirable because they require high proportions of objectionable flammable and/or chloro-containing high permeability blowing agents.

Suh, U.S. Patent No. 5,011,866, discloses blowing agents comprising at least 70 weight percent HFC-143a (1,1,1-trifluoroethane) or HFC-134a (1,1,1,2-tetrafluoroethane) for the preparation of polystyrenic insulating foams having small closed cells, low densities (1 to 6 pounds per cubic foot [16-96 kg $m^{-3}$]) and high dimensional stabilities among other properties. HFC-143a is objectionable for its flammability, and HFC-134a presents processing difficulties as indicated in York U.S. Patent Nos. 5,146,896 and 5,204,169 and European Patent Application No. EP-A-0515125.

Omire et al, U.S. Patent No. 5,145,606, disclose eleven categories of mixed blowing agents for foaming thermoplastics such as polystyrene and polyethylene. Included among the blowing agent mixtures are four that comprise a tetrafluoroethane, which may be HFC-134a and/or HFC-134 (1,1,2,2-tetrafluoroethane), mixed with one or more selected hydrochlorofluorocarbons (HCFC). Omire, however, teaches that HFC-134 and HFC-134a cannot be advantageously used alone as a blowing agent for thermoplastics, and tetrafluoroethane should be used in combination with at least one chloro-containing blowing agent.

Rubin et al, U.S. Patent No. 5,314,926, describe blowing agents for polystyrene and other non-isocyanurate based foamable plastics comprising 1,1,1,2,3,3,3-heptafluoropropane (HFC-227ea) in combination with one or more hydrocarbons or partially halogenated alkanes, which may contain chlorine substituents or be chlorine free. The disclosed system has the disadvantage of requiring HFC-227ea, a high HGWP (0.6) material, i.e. environmentally objectionable, as part of the composition.

Volcker et al, U.S. Patent No. 5,334,337, disclose high compression strength foam board prepared from polystyrene containing 5-16 weight percent of a blowing agent mixture containing an alcohol or ketone, carbon dioxide ($CO_2$) a $C_3$-$C_5$ hydrocarbon and fluorinated hydrocarbons. The disclosed technology is disadvantageous in that it includes at least one flammable component which is also a volatile organic compound (VOC); the usage of which is regulated in many countries.

Bartlett et al, U.S. Patent No. 5,182,040, disclose azeotropic and azeotropic-like binary compositions of HFC-134 with HFC-152a (1,1-difluoroethane), dimethyl ether (DME) and selected halocarbons and hydrocarbons are useful as refrigerants, aerosol propellants and blowing agents for polymer foams, as does WO 92/17558. WO 93/09199 discloses certain compositions comprising 10-70 weight% $HF_2C$-$CHF_2$.

We discovered that 1,1,2,2-tetrafluoroethane, HFC-134, is substantially as effective as HFC-152a as a blowing agent for thermoplastic resins with the added advantages over HFC-152a of affording nonflammability and lower permeability through thermoplastic resins. This is a surprising and unexpected result since those skilled in the art believe HFC-134 alone and an azeotrope thereof with HFC-152a have essentially no effect on the solid polystyrene. Further, HFC-134 is superior to its isomer, HFC-134a, as a blowing agent for such foams. HFC-134 can exert a lower solution pressures in the extrusion step thereby permitting HFC-134 to be utilized in conventional foam manufacturing equipment.

The aforementioned discovery solves problems in this field by providing a method for forming improved thermoplastic insulating foams produced with the aid of effective environmentally friendly and nonflammable blowing agents, preferably in conventional equipment. The instant invention solves a further problem by providing a method for forming foams suitable for use as insulating and structural elements wherein the blowing agents also exhibit acceptably low permeabilities through the thermoplastic resins, sufficient for improved long-term insulating values. The instant invention solves these problems by providing a method utilising effective, environmentally friendly and non-flammable blowing agents for producing foam materials for food packaging and food service; normally by employing in conventional foam manufacturing equipment.

The invention comprises a process for producing closed-cell, substantially void-free styrenic thermoplastic resin foam comprising the steps of:

a) forming a substantially homogenous molten mixture of 70-99 weight percent styrenic thermoplastic resin and 1-30 weight percent of a substantially non-flammable hydrofluorocarbon blowing agent composition, being devoid of components having substituents other than fluorine and comprising greater than 70 weight percent 1,1,2,2-tetrafluoroethane (HFC-134) in the blowing agent composition, at a non-foaming temperature of 200-235°C and a pressure of 41.4 bar (600 psia) or higher;

b) cooling said composition to a temperature of 115-150°C;

c) extruding said mixture through a die into a zone at an elevated temperature of a least 140°C and a pressure of up to 207 bar (3000 psia) at a controlled rate effective to obtain a closed-cell foam body, in a conventional apparatus for the preparation of thermoplastic foam in which conventional thermoplastic foam blowing agents, such as dichlorofluoromethane (CFC-12) or mixtures of 1-chloro-1,1-difluoroethane (HCFC-142b)/ chlorodifluoromethane (HCFC-22), are employable;

d) allowing said foam body to cool and increase in viscosity at a temperature and pressure such that there is obtained a substantially rigid closed-cell foam body having an average cell size of from 0.1-1.5 mm and a density of from 12-240 kilograms per cubic meter.

The instant invention can be employed to obtain closed-cell foams having a wide range of characteristics. The cells of the foam have an average cell size of from 0.1 to 1.5 millimeters (mm) when measured across a minimum cross-sectional dimension of the body. The foam body typically has a minimum cross-section dimension (thickness) of at least 0.04 inch (1 mm) and a cross-sectional area of at least 2 square inches (13 square centimeters). The density of the foam is from 0.75 to 15 pounds per cubic foot (hereinafter pcf, equivalent to 12 to 240 kilograms per cubic meters). Normally, the foam has a thickness of at least about 0.5 inch (1.27 cm), typically at least about 1.0 inch (2.54 cm), and usually at least about 1.5 inches (3.9 cm). The cross-sectional area of the foam body can be at least about 4 square inches (26 square centimeters), usually at least about 8 square inches (52 square centimeters) and normally at least about 16 square inches (104 square centimeters). While the density of the foam body is dependent upon many variables, the density is typically at least about 1.5 pcf (24 $Kg/m^3$), normally at least about 3 pcf (48 $Kg/m^3$) and usually at least about 6 pcf (96 $Kg/m^3$).

The thermoplastic resin is polystyrenic. Further details regarding the composition of the foam body as well as the components/systems that are used for forming the foam body can be found in "Modern Plastics Encyclopedia '92," Volume 68, Number 11; Chapters on: "Primary Processing," "Chemicals and Additives".

The foam body is produced by (a) forming a substantially homogeneous molten mixture of the normally solid thermoplastic resin and an effective foaming amount of the blowing agent at a nonfoaming elevated temperature and pressure, (b) extruding the mixture through a die into an expansion zone at a controlled foaming temperature and reduced pressure at a controlled rate effective to form a closed cell substantially void free foam body, (c) allowing the foam body to cool and increase in viscosity at temperatures and pressures such that there is obtained a substantially closed cell foam body having cell size dimensions an density as defined above at ambient temperatures and atmospheric pressure. The specific process conditions for obtaining the substantially closed cell body are as set out herein as understood by a skilled person in this art.

The invention comprises a method for forming sheets of relatively low density closed cell foam body suitable for use as a thermoformable starting material for producing food-packaging materials. One suitable technique for making such foams are described in U.S. Patent No. 5,204,169. Another aspect comprises a method for forming a relatively thick and high density foam body suitable as insulation, for example, in the form of boardstock in building constructions. In a further aspect the invention comprises a method for forming higher density closed cell insulating foams suitable for use as structural members. The insulating foam bodies formable by the method of the invention are further characterized as exhibiting low blowing agent permeabilities, e.g., low loss of blowing agent, thereby improving thermal insulation value of the foam over time as measured by its K-factor.

The blowing agent composition for use in this invention comprises HFC-134 alone or as substantially nonflammable environmentally friendly mixtures thereof containing less than about 30 weight percent of other compatible blowing agents that are devoid of halogen substituents other than fluorine. Such blowing agents normally have 1 to 2 carbon atoms and are not classified as photochemically reductive VOCs (volatile organic compounds). That is, the blowing agent composition is substantially nonflammable, has zero ozone depletion potential (ODP) and low halocarbon global warming potential (HGWP) or "greenhouse effect". In some cases, it may be desirable to employ HFC-134 in conjunction with one or more additive or co-blowing agents selected from the group consisting of HFC-134a (1,1,1,2-tetrafluoroethane, $CF_3CCH_2F$), HFC-152a (1,1-difluoroethane, $CF_2HCH_3$), HFC-143a (1,1,1-trifluoroethane, $CF_3CH_3$), HFC-32 (difluoromethane, $CF_2H_2$), HFC-125 (pentafluoroethane, $CF_3CF_2H$), among others. Normally, in terms of weight percent the amount of additive blowing agent corresponds to less that about 22, usually less than about 13, and typically substantially nil, based on the total weight of the blowing agent composition. The blowing agent includes azeotropic and azeotrope-like mixtures of HFC-134 with said co-blowing agents. An example of such azeotropes includes the flame resistant and nonflammable mixtures of HFC-134 with HFC-152a within the range of 78 weight % or more of HFC-134 and 22 weight % or less of HFC-152a, and normally within the range of 87 weight % or more of HFC-134 and 13 weight % or less of HFC-152a. Examples of such nonflammable mixtures are also disclosed in the aforementioned Watanabe et al, EP 483 573A1 and Bartlett et al. references.

The amount of blowing agent will range from 1 to 30 weight percent based on the total weight of the resin blowing agent composition, usually 2 to 20, and typically 2 to 10 weight percent. The specific effective amount of the blowing agent will depend upon the particular type and grade of resin being employed and the desired resultant properties.

By a "closed cell substantially void-free foam body" it is meant a foam with a substantially uniform cell structure which has greater than about 50% closed cells, preferably greater 90% closed cells as measured by ASTM D2856-70.

By "nonflammable" it is meant to refer to satisfying the criteria set forth in ASTM E6871-85 with modifications listed in draft form, Nov. 1993, by ASTM Committee E27 or by ASTM E918; hereby incorporated by reference.

By "low halocarbon global warming potential (HGWP) effect," it is meant a blowing agent having an HGWP value of about 0.50 or less, usually less than about 0.32 and typically less than about 0.30 as determined by the method described by D. A. Fisher et al, NATURE 1990, 344, p. 513.

Cell sizes of the foam are determined by ASTM method D2842-69, and foam dimensional stabilities by ASTM D2126/C758.

Foam densities are determined by ASTM D1622-83.

The invention is based on the discovery that contrary to expectations HFC-134: (1) is superior to its isomer HFC-134a as blowing agent for thermoplastic foams, in that it and mixtures thereof exert substantially lower solution pressures (higher solubilities in the resin phase) over the range of temperatures and pressures employed in extruding the compositions as foams such that HFC-134 may be used in conventional equipment without modification to produce substantially void-free closed cells; (2) alone or as mixtures thereof produce high quality closed cell foams having desirably small cell sizes over a wide range of densities, dimensional stability and low permeability through thermoplastic film, thus providing long-lived insulating and structural foams; (3) is superior to HFC-143a and HFC-152a, which are recommended in the art for use in producing thermoplastic insulating foams, in that HFC-134 and mixtures thereof have lower permeability through thermoplastic film thereby providing improved insulating characteristics while offering the added advantages of being nonflammable; (4) if alone or in combination with other environmentally friendly hydrofluorocarbon blowing agents can be an acceptable replacement of such heretofore commercially employed blowing agents for thermoplastic foams such as CFC-11, CFC-12, HCFC-22 and HCFC-142b.

Figure 1 graphically represents the solubilities in a typical normally solid polystyrenic resin of HFC-134 in comparison to HFC-134a, HFC-152a and of HFC-143a over a wide of range of temperatures embracing extrusion temperatures useful in the foam-producing process of the invention.

Figure 2 graphically represents the interaction parameters of HFC-134, HFC-134a, HFC-152a and HFC-143a with polystyrene over a temperature range of 20 to 220°C.

Figures 3, 4, 5, and 6 are log-log plots that relate to the solubility of HFC-134, HFC-134a, HFC-152a and HFC-143a, respectively, as superheated vapor in polystyrene resin over a 20 to 220°C temperature range.

The invention comprises a method for forming a substantially solid closed cell thermoplastic insulating foam body wherein the cells are substantially completely filled with a substantially nonflammable blowing agent comprising more than about 70 weight percent of HFC-134, the balance, if any, of the blowing agent comprising one or more components that are devoid of halogen substituents other than fluorine, and have low HGWP values. Examples of suitable blowing agent components for use with HFC-134 include hydrofluorocarbons comprising at least one of HFC-134a, HFC-143a, HFC-152a, HFC-32, HFC-125, azeotropic and azeotrope-like mixtures with HFC-134, e.g., as described above, among others. Other acceptable blowing agent components that may be used in conjunction with HFC-134, with or without the other HFC components, comprise at least one of $N_2$, $CO_2$, argon, other rare gases, among others. Hydrocarbons and other VOC compounds are desirably absent.

Normally, the HFC-134 content of the blowing agent composition is at least 78% by weight, usually at least 87, and desirably essentially 100 percent. The average cell size is less than 1.5mm, and normally not more than about 1.2 mm. When the foam is employed as an insulating body, the thickness can be between 0.04 and 6 inches (1 to 152 mm), and the foam density from about 0.75 to about 15.0 pounds per cubic foot (12 to 240 kilograms per cubic meter). Consequently, the foam formed by the method of the instant invention provides small cells, is obtained by using a low permeability environmentally friendly blowing agent(s), and provides long-term insulating properties to thermoplastic foam bodies while excluding release of ozone-depleting halocarbons and smog-producing volatile organic compounds into the atmosphere.

The polystyrenic resinous component of the invention foam products, sometimes referred to in the art as "styrenic resin", may vary widely in chemical composition. Broadly included as resins that can be employed in the instant invention are solid thermoplastic polymers of one or more polymerizable alkenylaromatic compounds. The polymer or copolymer comprises in chemically combined form at least one alkenylaromatic compound having the general formula $Ar\text{-}C(R) = CH_2$, wherein Ar represents an aromatic hydrocarbon radical of the benzene series, typically phenyl, and wherein R normally represents hydrogen (preferably) or a methyl radical. While any suitable alkenyl aromatic resins can be employed, examples comprise the solid homopolymers of styrene, alpha-methylstyrene, o-methylstyrene, m-methylstyrene and p-methyl styrene; also the solid copolymers of two or more such alkenylaromatic compounds, among others. The polymers may also include in copolymerized form relatively minor proportions of other polymerizable olefinic compounds, such as, for example, methyl methacrylate, acrylonitrile, methacrylic acid, acrylic acid, maleic anhydride, among others. Without wishing to be bound by any theory or explanation, it is believed that the non-styrenic monomers can contribute via their oxygen and nitrogen containing moieties polymer sites for solvating HFC-134 (and other hydrofluorocarbon components of the blowing agent) during the step of mixing polystyrenic resins blowing agent blends prior to foaming. A desirable polystyrenic resin comprises the solid homopolymer, polystyrene, due to its low cost and readily availability.

Thermoplastic foam bodies are conveniently produced by the method of the invention using conventional equipment comprising an extruder and associated means for (1) melting the resin; (2) homogeneously blending the blowing agent composition with the melt to form a plasticized mass at nonfoaming temperatures and pressures; (3) passing the plasticized mass at a controlled rate, temperature and pressure through a die having a desired shape, e. g., slit die for producing rectangular slabs of foam board having desired thickness and surface area, into an expansion zone; (4) allowing the extrudate to foam in the expansion zone maintainable at suitable temperatures and low pressures; (5) maintaining the expanding extrudate under such temperatures and pressures for a time sufficient for the viscosity of the extrudate to increase such that the cell size and density of the foam remain substantially unchanged and substantially free of ruptured cells at ambient temperature, e.g., 25°C and atmospheric pressure; and (6) recovering the extruded foam body.

The amount of the blowing agent is in the range of from 1 to 30 weight percent based on the total weight of the resin plus blowing agent mixture, typically 2 to 20 weight percent, and normally 2 to 10 weight percent. The relatively lower the concentration of blowing agent, the greater the density of the resulting foam. The proper amount of blowing agent or resultant characteristics of the foam for any desired end-use are readily determined by a skilled person in this art who has reviewed and understood the instant invention. The resin is melted at a temperature of 200 to 235°C depending upon the grade employed, and at nonfoaming pressures of 41.4 bar (600 psig) or higher. The plasticized resin-blowing agent mixture is cooled under nonfoaming pressure to a temperature of 115 to 150°C, normally 130°C, and extruded into the expansion zone.

When preparing foams of this invention, it is often desirable to add a nucleating agent or other additive into the resin. Nucleating agents serve primarily to increase cell count and decrease cell size in the foam, and may be used in an amount of about 0.1 to about 4 parts by weight per 100 parts by weight of the resin. Typical nucleating agents comprise at least one member selected from the group consisting of talc, sodium bicarbonate-citric acid mixtures, calcium silicate, carbon dioxide, among others. Other additives often also incorporated into the resin include, for example, colorants, antioxidants, lubricants, stabilizers, fire retardants, among others, depending upon the end use of the resin.

Representative foamed products that can be made in accordance with the present invention comprise: (1) polystyrene foam sheet for the production of disposable thermoformed packaging materials, e.g., as disclosed in York U.S.P.N. 5,204,169; (2) extruded polystyrene foam boards for use as residential and industrial sheathing and roofing materials, which may be from about 0.5 to 6 inches (1.25 to 15 cm) thick, up to 4 feet (122 cm) wide, with cross-sectional areas of from 0.17 to 3 square feet (0.016 to 0.28 square meter), and up to 27 feet (813 meters) long, with densities of from about 1.5 to 10 pounds per cubic foot (pcf) (25 to 160 kilograms per cubic meter ($kg/m^3$)); (3) expandable foams in the form of large billets which may be up to about 2 feet (61 cm) thick, often at least 1.5 feet (46 cm) thick, up to 4 feet (1.22 meters) wide, up to 16 feet (4.8 meters) long, having a cross-sectional area of about 2 to 8 square feet (0.19 to 0.74 square meter) and a density of from 6 to 15 pcf (96 to 240 kg/m$^3$). Such foamed products are more fully described by Stochdopole and Welsh in the Encyclopedia of Polymer Science and Engineering, vol. 16, pages 193-205. John Wiley & Sons, 1989.

Certain aspects of the invention are illustrated by the Figures. The accompanying figures illustrate the suitability of HFC-134 as blowing agent for producing polystyrenic foam bodies, the data presented therein were obtained with the aid of the well-known Flory-Huggins equation (Flory, P.J.: "Principles of Polymer Chemistry"; Cornell University Press, Ithaca, N.Y.), discussed below.

Referring now to the Figures, Figure 1 is a plot of weight% material soluble in polystyrene resin vs. temperature which shows that the solubility of HFC-134, in comparison to other HFCs, in a representative polystyrene resin (having a glass transition temperature of 85°C and a melting point of 105°C) increases with increasing temperatures, as measured at the mixtures' equilibrium pressures. These equilibrium pressures relate to the point in the extrusion process where blowing agent is mixed with resin; foaming cannot occur at these pressures. Figure 1 shows that the solubility of HFC-134 and HFC-152a in the selected resin are similar over the entire temperature range, and that their solubilities are significantly greater than those of HFC-134a and HFC-143a. HFC-134 and HFC-152a also show superior solubilities under extrusion conditions; data demonstrating such solubility are illustrated in Figures 3, 4, 5 & 6 and are abstracted below in Tables 1 and 2.

Referring now to Figures 3-6, Figures 3-6 relate to the solubility of superheated HFC-134 vapor in polystyrene resin at the following selected temperatures 20°, 60°, 140°, 180° and 220°C at pressures as high as about 207 bar (3000 psia). The data presented in Figures 3-6 were determined through use of the Flory-Huggins equation for phase equilibria in polymer solutions. This equation uses values for the following parameters [(1) - (4)], which were obtained as follows:

(1) liquid densities of the blowing agents, g/cc, were derived by using standard methods, drawing a straight line through the liquid density data (based on National Institute of Standards and Technology, NIST, experimental data; with equations based on the Modified Benedict-Webb-Rubin, MBWR, equation of state) from -50°C to 50°C and calculating the liquid density as a function of temperature. The density (d) equation recites: d=AT+B, wherein A is the slope of the line, B is the constant of the line, and T temperature (°C). The liquid densities are (grams/cubic centimeter, g/cm$^3$):

| Liquid Densities | | | | | |
|---|---|---|---|---|---|
| Component | 50°C | 85°C | 100°C | 120°C | 150°C |
| HFC-134 | 1.214 | 1.104 | | 0.994 | 0.888* |
| HFC-134a | 1.108 | 0.983 | | | 0.749 |
| HFC-152a | 0.819 | | 0.655 | 0.572 | |
| HFC-143a | 0.804 | | 0.645 | 0.553** | 0.460 |
| Resin*** | 1.056 | 1.051 | 1.041 | 1.025 | 1.011 |

* 160°C
** 125°C
*** Arco Dylene® 8G Polystyrene, t.g.=85°C, m.p. 105°C

(2) The densities of the superheated vapors of the blowing agents, which are tabulated below, were calculated from the known vapor data of their thermodynamic properties (based on National Institute of Standards and Technology, NIST, experimental data; with equations based on the Modified Benedict-Webb-Rubin, MBWR, equation of state).

| Superheated Vapor Densities (g/cm$^3$) | | | | | |
|---|---|---|---|---|---|
| Component | 50°C | 85°C | 100°C | 120°C | 150°C |
| HFC-134 | 0.04379 | 0.04497 | | 0.03830 | 0.04867* |
| HFC-134a | 0.03390 | 0.02975 | | | 0.03158 |
| HFC-152a | 0.02495 | | 0.02281 | | 0.02942 |
| HFC-143a | 0.04611 | 0.04386 | | 0.03204** | 0.04349 |

* 160°C
** 125°C

(3) The activity coefficients for the blowing agents that are tabulated below:

| Activity Coefficients | | | | |
|---|---|---|---|---|
| Temp. °C | HFC-134 | HFC-134a | HFC-152a | HFC-143a |
| 50 | 0.877 | 0.605 | 0.728 | 0.537 |
| 85 | 0.447 | 0.273 | | |
| 100 | | | 0.277 | 0.238 |
| 120 | 0.218 | | | |
| 125 | | | | |
| 150 | | 0.112 | 0.174 | 0.133 |
| 160 | 0.116 | | | |

These coefficients were determined by dividing the experimental blowing agent partial pressure by the saturated vapor pressure at that temperature.

(4) The interaction parameters, X1, were determined at four temperatures, and are presented graphically as a function of temperature in Figure 2 by means of the following equation and equation constants:

$$X1 = A/T + B$$

(where T = °K = °C + 273.2)

| Compound | A | B |
|---|---|---|
| HFC-134 (<85°C) | 2553.95 | -5.75256 |
| HFC-134 (>85°C) | 2075.829 | -4.44256 |
| HFC-143a (<85°C) | 4641.477 | -11.5113 |
| HFC-143a (>85°C) | 2450.138 | -5.40252 |
| HFC-152a (<85°C) | 1944.713 | -4.51260 |
| HFC-152a (>85°C) | 2013.858 | -4.64595. |

Representative X1 values are:

| Temp. °C | HFC-134 | HFC-134a | HFC-152a | HFC-143a |
|---|---|---|---|---|
| 50 | 2.2 | 2.80 | 1.50 | 2.90 |
| 100 | 1.1 | 1.50 | 0.75 | 1.20 |
| 125 | 0.75 | 1.10 | 0.40 | 0.75 |
| 150 | 0.50 | 0.80 | 0.10 | 0.40 |
| 200 | -0.05 | 0.20 | 0.40 | -0.25 |

Referring now to Figure 2, these data permit calculating the limiting and superheated solubilities of the blowing agents via the Flory-Huggins equation, utilizing the values of (1)-(4) above. Such data are presented graphically in Figures 3, 4, 5 and 6. Figures 3-6 are plots of "weight% Blowing Agent Dissolved in Resin vs. Pressure of Solution" as a function of temperature. Representative solubilities of the blowing agents in the given resin at various extrusion process temperatures at atmospheric pressure (14.7 psia, 1 bar), are listed below in Table 1:

Table 1

| WT% Blowing Agent Dissolves in Resin | | | | |
|---|---|---|---|---|
| Temp.°C | HFC-134 | HFC-134a | HFC-143a | HFC-152a |
| 200 | 0.15 | 0.08 | 0.05 | 0.15 |
| 180 | 0.2 | 0.1 | 0.07 | 0.2 |

Table 1 (continued)

| WT% Blowing Agent Dissolves in Resin | | | | |
|---|---|---|---|---|
| Temp.°C | HFC-134 | HFC-134a | HFC-143a | HFC-152a |
| 140 | 0.3 | 0.15 | 0.1 | 0.3 |
| 100 | 0.4 | 0.19 | 0.13 | 0.4 |
| 60 | 0.5 | 0.2 | 0.08 | 0.5 |
| 20 | 0.6* | 0.16* | 0.04 | 0.8 |

* 25°C

The Table 1 data indicate that during the extrusion foaming stage of foam production the solubility, respectively, of HFC-134 and HFC-152a in the resin per se, as distinct from the amount of such material in the cells of the resultant foam, progressively increase with decreasing temperature at a given foaming pressure. The same trend is evident upon examining the data from the Figures at the other pressures, e.g., 100 psia (6.9 bar).

This resin solubility effect indicates that a better, more uniform foam will result. The HFC-134 (and HFC-152a) solubilities in the resin increase, i.e., solution pressures decrease, with decreasing temperature during extrusion. These characteristics are advantageous by providing conditions for foam formation which are conducive to closed cell production over a wide range of densities while minimizing the possibility of blown/ruptured cells.

The data in these Figures, show that the HFC-134/HFC-134a solubility ratio is substantially steady at a ratio of about 2/1 over the 200 to 100°C temperature range during which the resin-blowing agent composition is substantially molten. The solubility ratio, however, increases at temperatures of about 60°C and 20°C, which are below the melting and glass transition temperatures of the resin. These solubilities are surprising and unexpected, and when translated into the closed cell foam product correspond to a wide range of densities with fewer blow/ruptured cells.

The following Table 2 presents similar solubility data that demonstrates the superiority of HFC-134 and HFC-152a over the other blowing agents at an extrusion temperature of 180°C, in terms of the (1) higher limiting, i.e., maximum solubilities at the extrusion temperature, (2) the lower vapor pressures exerted by HFCs 134 and 152a at a 10 weight percent solubility in the resin, and; (3) the more favorable solubilities at 1 atmosphere pressure at both the extrusion temperature of 180°C and the final at rest temperature of 25°C.

Table 2

| Blowing Agent | Extruder Temp °C | Limiting Solubility (wt % HFC) | at Extruder Temp for 10% Load (psia [bar]) | Solubility (wt % HFC) at 1 Atm of HFC Pres. | |
|---|---|---|---|---|---|
| | | | | Ext Temp | 25°C |
| HFC-134 | 180 | 81 | 630 [43.4] | 0.2 | 0.54 |
| HFC-134a | 180 | 69 | 1000 [68.9] | 0.11 | 0.16 |
| HFC-143a | 180 | 69 | 1370 [94.5] | 0.07 | 0.04 |
| HFC-152a | 180 | 83 | 620 [42.7] | 0.2 | 0.76 |

Similar results are obtained at higher and lower extrusion temperatures, e.g., 200° and 130°C.

Table 3

| Solution Pressure of Blowing Agents in Polystyrene Resin at 140°C | | |
|---|---|---|
| Blowing agent | Concentration (wt% in resin*) | Solution Pressure (psia [bar]) |
| HFC-134 | 10.00 | 450 [31.0] |
| HFC-134a | 10.00 | 740 [51.0] |
| HFC-143a | 8.23 | 810 [55.8] |
| HFC-152a | 6.47 | 340 [23.4] |

* wt% adjusted to achieve molar equivalency

Employing a procedure identical to that detailed above on Quantum "Petrothene" grade low density polyethylene, the following Table 4 presents similar solubility data that demonstrates the superiority of HFC-134 over other fluorinated blowing agents at an extrusion temperature of 180°C, in terms of the (1) higher limiting, i.e., maximum solubilities at the extrusion temperature, (2) the lower vapor pressure exerted at 10 weight percent solubility in the resin, and; (3) the more favorable solubility at 1 atmosphere pressure at both the extrusion temperature of 180°C and the final at rest temperature of 25°C.

Table 4

| Blowing Agent | Extruder Temp °C | Limiting Solubility (wt % HFC) | at Extruder Temp for 10% Load (psia [bar]) | Solubility (wt % HFC) at 1 Atm of HFC Pres. | |
|---|---|---|---|---|---|
| | | | | Ext Temp | 25°C |
| HFC-134 | 180 | 81 | 621 [42.8] | 0.20 | 0.64 |
| HFC-161* | 180 | 89 | 600 [41.4] | 0.24 | 0.22 |
| HCFC-114** | 180 | 78 | 324 [22.3] | 0.38 | 2.01 |
| HFC-134a | 180 | 74 | 828 [57.1] | 0.14 | 0.22 |

* HFC-161 is 1-fluoroethane ($CFH_2CH_3$)

**HCFC-114 is 1,2-dichloro-1,1,2,2-tetrafluoroethane ($CClF_2CClF_2$)

Example 1

The following example serves to illustrate the ability to use HFC-134 to produce a polystyrene insulation foam with fine, uniform cell structure, long-term insulation value, and good dimensional stability.

The extruder employed was designed for use with CFC-12 ($CCl_2F_2$) and was converted to a blowing agent blend of HCFC-142b ($CFCl_2CH_3$)/HCFC-22 ($CHClF_2$) 60/40 wt.%. The HCFC-142b/HCFC-22 blend exhibits solution pressure in polystyrene similar to CFC-12.

The example 1 data reveals that HFC-134 performs very similar to HCFC-142b/HCFC-22 blend (note die pressure, foam thickness, foam width, and foam density). With HFC-134a, the die gap had to be closed to control the process (from 1.9 mm to 1.7 mm), which yielded a higher operating pressure (2483 psig). It was also necessary to reduce the resin melt temperature (from 129 °C to 116 °C) to reduce premature foaming in the die. However, even with these changes, HFC-134a blown foam was heavy (43 kg/cubic meter), had a rough surface, and did not achieve the required thickness and width.

Foam trials to produce polystyrene foam insulation were conducted using a commercial tandem extruder equipped with an experimental die, designed for higher pressure operation.

Primary extruder diameter = 120 mm.
Secondary extruder diameter = 200 mm.
Polystyrene resin = Shell NX606 general purpose, 2.5 melt index.
Nucleator = Magnesium silicate talc

| | Trial 1 | Trial 2 | Trial 3 |
|---|---|---|---|
| Blowing agent | 22/142b | HFC-134a | HFC-134 |
| Primary extruder (rpm) | 40/60 wt % 70 | 70 | 70 |
| Primary extruder (amps) | 264 | 270 | 267 |
| Extrusion rate (kg/hr) | 430 | 422 | 438 |
| Blowing agent rate (kg/hr) | 46.5 | 45.8 | 45.1 |
| Blowing agent concentration (wt.%) | 10.82 | 10.86 | 10.31 |
| Nucleator concentration (wt.%) | 0.6 | 1.16 | 0.8 |
| Secondary extruder speed (rpm) | 4.9 | 4.9 | 4.9 |
| Secondary extruder (amps) | 102 | 122 | 112 |
| Die pressure (psig[bar]) | 1484[103] | 2483[172] | 1645[115] |
| Melt temperature (deg. C.) | 129 | 116 | 127 |
| Die gap (mm) | 1.9 | 1.7 | 1.9 |
| Die width (mm) | 100 | 100 | 100 |

(continued)

| | Trial 1 | Trial 2 | Trial 3 |
|---|---|---|---|
| Blowing agent | 22/142b | HFC-134a | HFC-134 |
| Foam thickness (mm) | 52 | 44 | 50 |
| Foam width (mm) | 317 | 249 | 285 |
| Foam density (kg/cubic meter) | 30.5 | 43 | 32.5 |
| Comments | Excellent foam | Too thin Foaming in die Rough surface | Excellent foam |

**Claims**

1. A process for producing closed-cell, substantially void-free styrenic thermoplastic resin foam comprising the steps of:

    a) forming a substantially homogenous molten mixture of 70-99 weight percent styrenic thermoplastic resin and 1-30 weight percent of a substantially non-flammable hydrofluorocarbon blowing agent composition, being devoid of components having substituents other than fluorine and comprising greater than 70 weight percent 1,1,2,2-tetrafluoroethane (HFC-134) in the blowing agent composition, at a non-foaming temperature of 200-235°C and a pressure of 41.4 bar (600 psia) or higher;

    b) cooling said composition to a temperature of 115-150°C;

    c) extruding said mixture through a die into a zone at an elevated temperature of a least 140°C and a pressure of up to 207 bar (3000 psia) at a controlled rate effective to obtain a closed-cell foam body, in a conventional apparatus for the preparation of thermoplastic foam in which conventional thermoplastic foam blowing agents, such as dichlorofluoromethane (CFC-12) or mixtures of 1-chloro-1,1-difluoroethane (HCFC-142b)/ chlorodifluoromethane (HCFC-22), are employable;

    d) allowing said foam body to cool and increase in viscosity at a temperature and pressure such that there is obtained a substantially rigid closed-cell foam body having an average cell size of from 0.1-1.5 mm and a density of from 12-240 kilograms per cubic meter.

2. The process of claim 1 wherein said foam is produced with 2 to 10 weight percent of blowing agent composition, based on the total weight of the resin-blowing agent composition, and the foam density is at least 24 $Kg/m^3$.

3. The process of claim 2 wherein the foam density is at least 96 $Kg/m^3$.

4. The process of claim 1 wherein the blowing agent composition further comprises at least one member selected from the group consisting of HFC-134a, HFC-152a, HFC-143a, HFC-32 and HFC-125 in an amount totalling less than 30 weight percent.

5. The process of claim 1 wherein the blowing agent composition comprises at least 78 weight percent HFC-134.

6. The process of claim 1 wherein the blowing agent composition comprises at least 87 weight percent HFC-134.

7. The process of claim 1 wherein the blowing agent composition consists essentially of HFC-134.

**Patentansprüche**

1. Verfahren zum Herstellen von geschlossenzelligem, weitgehend hohlraumfreien thermoplastischem Styrolharz-Schaumstoff, umfassend die Schritte:

    a) Erzeugen einer weitgehend homogenen schmelzflüssigen Mischung von 70% bis 99 Gew.% thermoplastischem Styrolharz und 1% bis 30 Gew.% einer im Wesentlichen nicht entflammbaren Kohlenwasserstoff-Treibmittelzusammensetzung, der Komponenten fehlen, die andere Substituenten als Fluor haben, und die mehr als 70 Gew.% 1,1,2,2-Tetrafluorethan (HFC-134) in der Treibmittelzusammensetzung aufweisen, und zwar bei einer nichtschaumbildenden Temperatur von 200° bis 235°C und einem Druck von 41,4 Bar (600 psia) oder höher;

b) Kühlen der Zusammensetzung bis zu einer Temperatur von 115° bis 150°C;

c) Extrudieren der Mischung durch ein Formwerkzeug in eine Zone bei einer erhöhten Temperatur von mindestens 140°C und einem Druck bis zu 207 Bar (3.000 psia) bei einer kontrollierten Geschwindigkeit, die wirksam ist, um einen geschlossenzelligen Schaumstoffkörper zu erhalten, und zwar in einem konventionellen Apparat für die Herstellung von thermoplastischem Schaumstoff, worin konventionelle thermoplastische Schaumstoff-Treibmittel, wie beispielsweise Dichlorfluormethan (CFC-12) oder Mischungen von 1-Chlor-1,1-difluorethan (HCFC-142b)/Chlordifluormethan (HCFC-22), einsetzbar sind;

d) den Schaumstoffkörper kühlen lassen und die Viskosität erhöhen bei einer Temperatur und einem Druck, so dass ein weitgehend starrer, geschlossenzelliger Schaumstoffkörper erhalten wird, der eine mittlere Zellgröße von etwa 0,1 bis 1,5 mm und eine Dichte von 12 bis 240 kg/$m^3$ hat.

**2.** Verfahren nach Anspruch 1, bei welchem der Schaumstoff mit 2% bis 10 Gew.% Treibmittelzusammensetzung, bezogen auf das Gesamtgewicht der Harz-Treibmittelzusammensetzung, erzeugt wird und die Dichte mindestens 24 kg/$m^3$ beträgt.

**3.** Verfahren nach Anspruch 2, bei welchem die Schaumstoffdichte mindestens 96 kg/$m^3$ beträgt.

**4.** Verfahren nach Anspruch 1, bei welchem die Treibmittelzusammensetzung ferner mindestens einen Vertreter aufweist, der ausgewählt ist aus der Gruppe, bestehend aus HFC-134a, HFC-152a, HFC-143a, HFC-32 und HFC-125, in einer Menge von insgesamt weniger als 30 Gew.%.

**5.** Verfahren nach Anspruch 1, bei welchem die Treibmittelzusammensetzung mindestens 78 Gew.% HFC-134 aufweist.

**6.** Verfahren nach Anspruch 1, bei welchem die Treibmittelzusammensetzung mindestens 87 Gew.% HFC-134 aufweist.

**7.** Verfahren nach Anspruch 1, bei welchem die Treibmittelzusammensetzung im Wesentlichen HFC-134 ist.

## Revendications

**1.** Procédé de production de mousse de résine thermoplastique styrénique sensiblement compacte, à alvéoles fermées, comprenant les étapes de :

a) formation d'un mélange fondu sensiblement homogène de 70-99 pour-cent en poids de résine thermoplastique styrénique et de 1-30 pour-cent en poids d'une composition d'agent gonflant hydrofluorocarboné sensiblement inflammable, dépourvue de composants ayant des substituants autres que le fluor et comprenant plus de 70 pour-cent en poids de 1,1,2,2-tétrafluoroéthane (HFC-134) dans la composition d'agent gonflant, à une température de non moussage de 200-235°C et à une pression de 41,4 bars (600 psia) ou supérieure ;
b) refroidissement de ladite composition à la température de 115-150°C ;
c) extrusion dudit mélange à travers une filière dans une zone à la température élevée d'au moins 140°C et à la pression de jusqu'à 207 bars (3000 psia) à une vitesse réglée, efficace pour obtenir un corps de mousse à alvéoles fermées, dans un appareillage conventionnel destiné à la préparation de mousse thermoplastique dans lequel des agents gonflants pour mousse thermoplastiques conventionnels, tels que le dichlorofluorométhane (CFC-12) ou des mélanges de 1-chloro-1,1-difluoroéthane (HCFC-142b)/chlorodifluorométhane (HCFC-22), soient utilisables ;
d) refroidissement dudit corps de mousse et augmentation en viscosité à une température et une pression telles qu'un corps de mousse à alvéoles fermées sensiblement rigide, qui ait une taille d'alvéoles moyenne de 0,1-1,5 mm et une densité de 12-240 kilogrammes par mètre cube, soit obtenu.

**2.** Procédé selon la revendication 1, **caractérisé en ce que** ladite mousse est produite avec 2 à 10 pour-cent en poids de composition d'agent gonflant, sur base du poids total de la composition résine-agent gonflant, et la densité de la mousse est d'au moins 24 kg/$m^3$.

**3.** Procédé selon la revendication 2, **caractérisé en ce que** la densité de la mousse est d'au moins 96 kg/$m^3$.

**4.** Procédé selon la revendication 1, **caractérisé en ce que** la composition d'agent gonflant comprend, de plus, au moins un membre choisi parmi le groupe se composant de HFC-134a, HFC-152a, HFC-143a, HFC-32 et HFC-125 en une quantité totalisant moins de 30 pour-cent en poids.

**5.** Procédé selon la revendication 1, **caractérisé en ce que** la composition d'agent gonflant comprend au moins 78 pour-cent en poids d'HFC-134.

**6.** Procédé selon la revendication 1, **caractérisé en ce que** la composition d'agent gonflant comprend au moins 87 pour-cent en poids d'HFC-134.

**7.** Procédé selon la revendication 1, **caractérisé en ce que** la composition d'agent gonflant est constituée essentiellement d'HFC-134.

FIG. 1

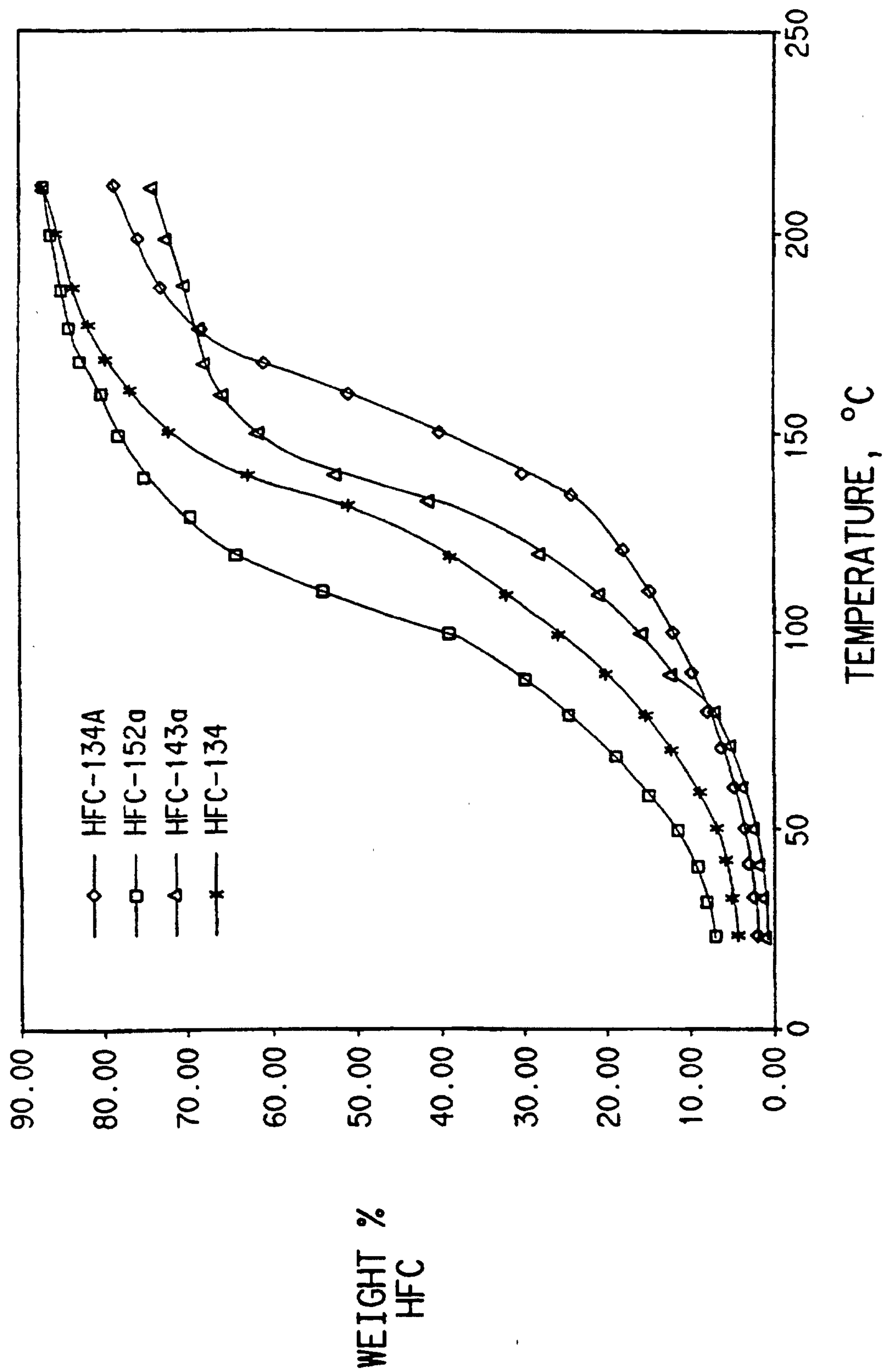
HFC-134A
HFC-152a
HFC-143a
HFC-134
WEIGHT % HFC
TEMPERATURE, °C
0.00
10.00
20.00
30.00
40.00
50.00
60.00
70.00
80.00
90.00
0
50
100
150
200
250

FIG.2

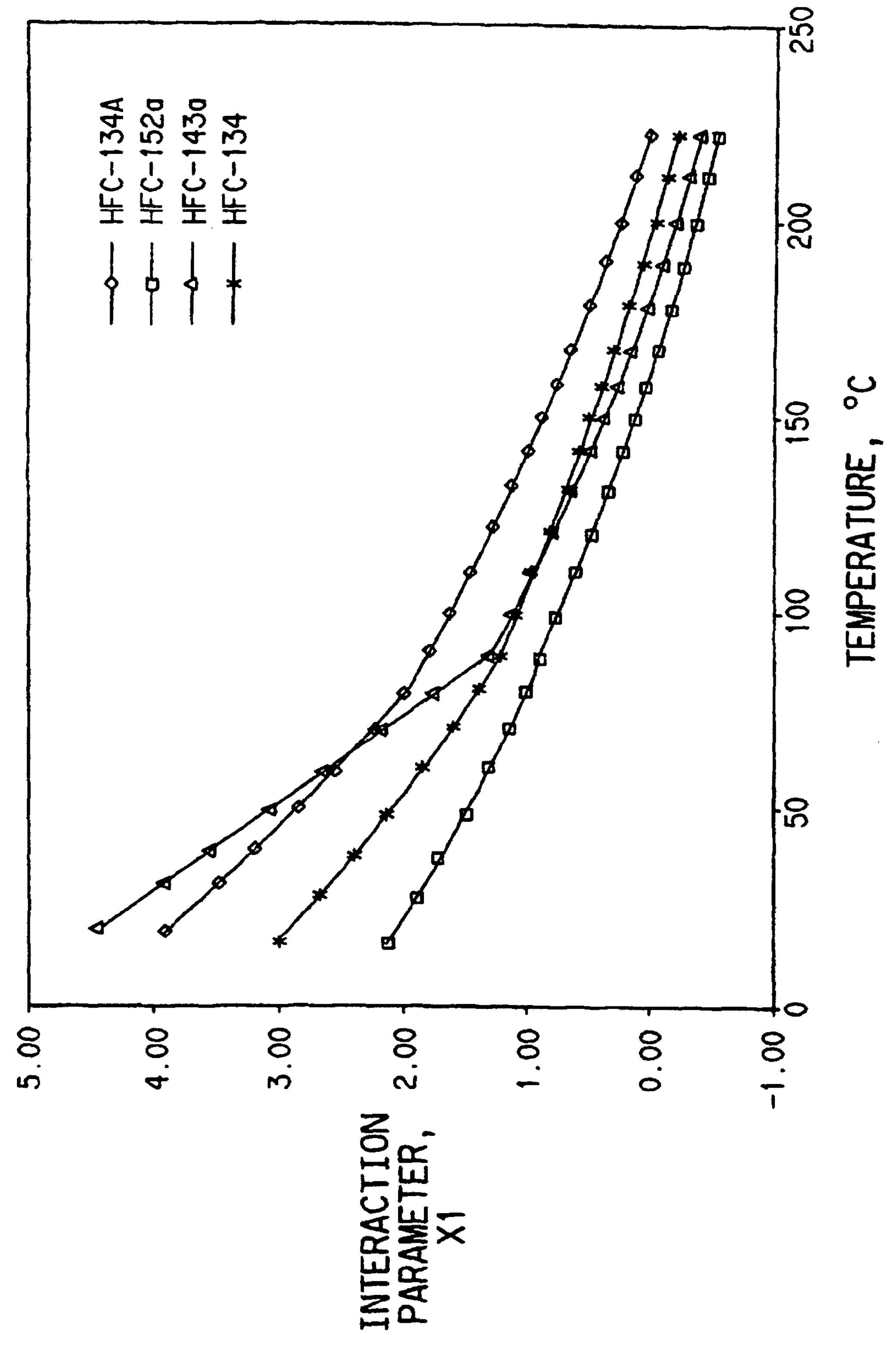
HFC-134A
HFC-152a
HFC-143a
HFC-134
INTERACTION PARAMETER, X1
5.00
4.00
3.00
2.00
1.00
0.00
-1.00
0
50
100
150
200
250
TEMPERATURE, °C

FIG.3

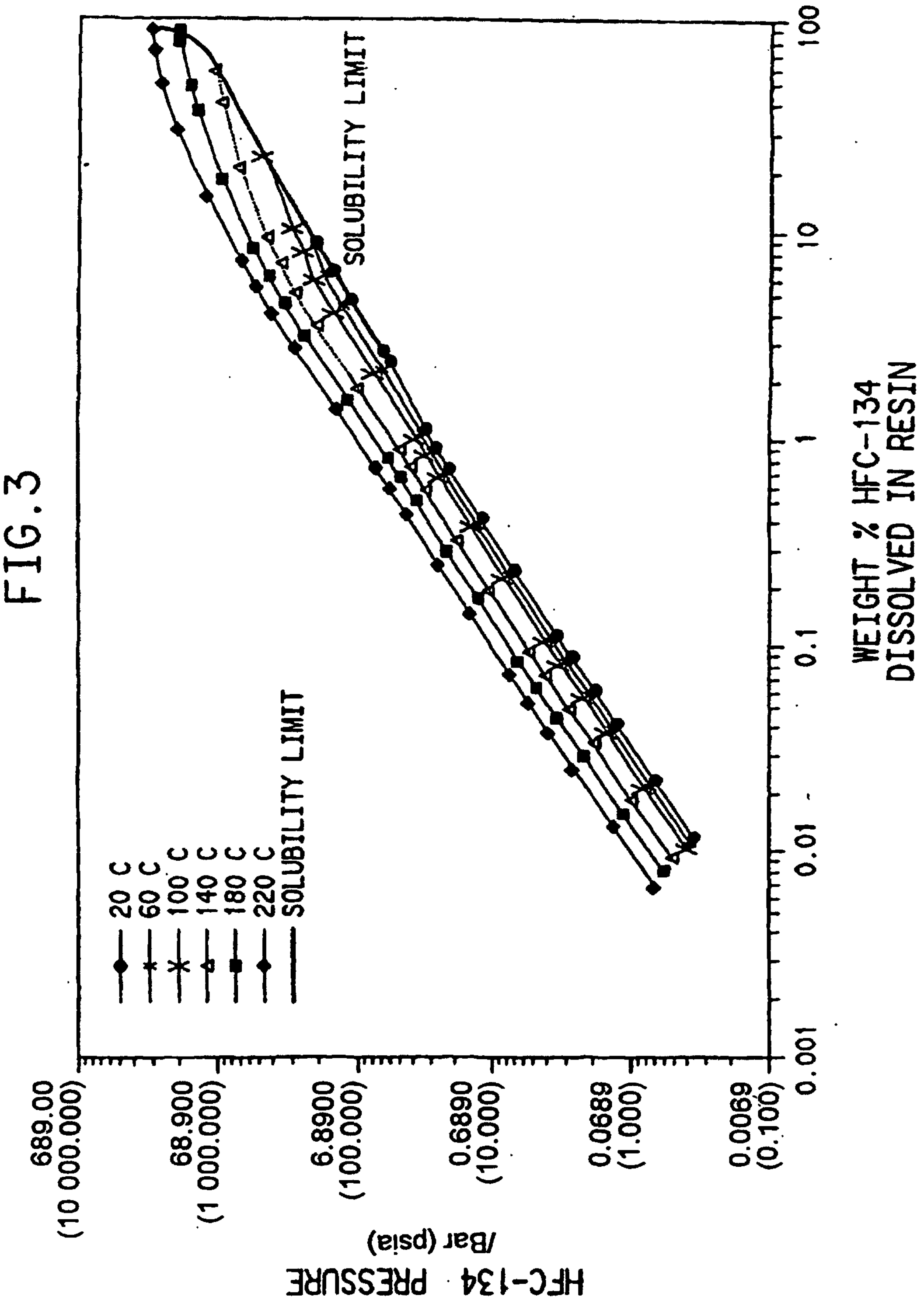
20 C
60 C
100 C
140 C
180 C
220 C
SOLUBILITY LIMIT
SOLUBILITY LIMIT
689.00 (10 000.000)
68.900 (1 000.000)
6.8900 (100.000)
0.6890 (10.000)
0.0689 (1.000)
0.0069 (0.100)
HFC-134 PRESSURE /Bar (psia)
0.001
0.01
0.1
1
10
100
WEIGHT % HFC-134 DISSOLVED IN RESIN

FIG.4

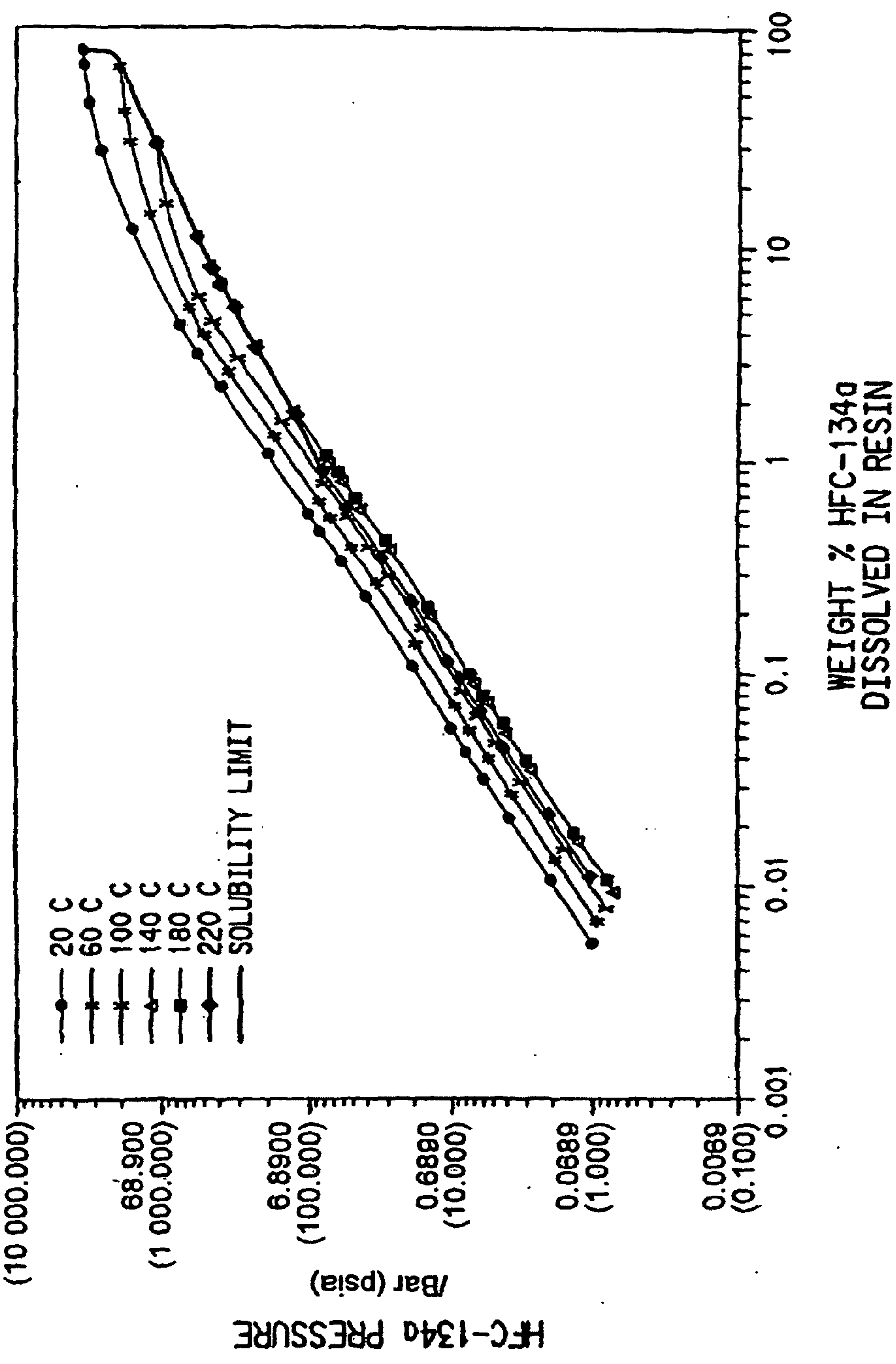
20 C
60 C
100 C
140 C
180 C
220 C
SOLUBILITY LIMIT
HFC-134a PRESSURE
/Bar (psia)
689.00 (10 000.000)
68.900 (1 000.000)
6.8900 (100.000)
0.6890 (10.000)
0.0689 (1.000)
0.0069 (0.100)
0.001
0.01
0.1
1
10
100
WEIGHT % HFC-134a
DISSOLVED IN RESIN

FIG.5

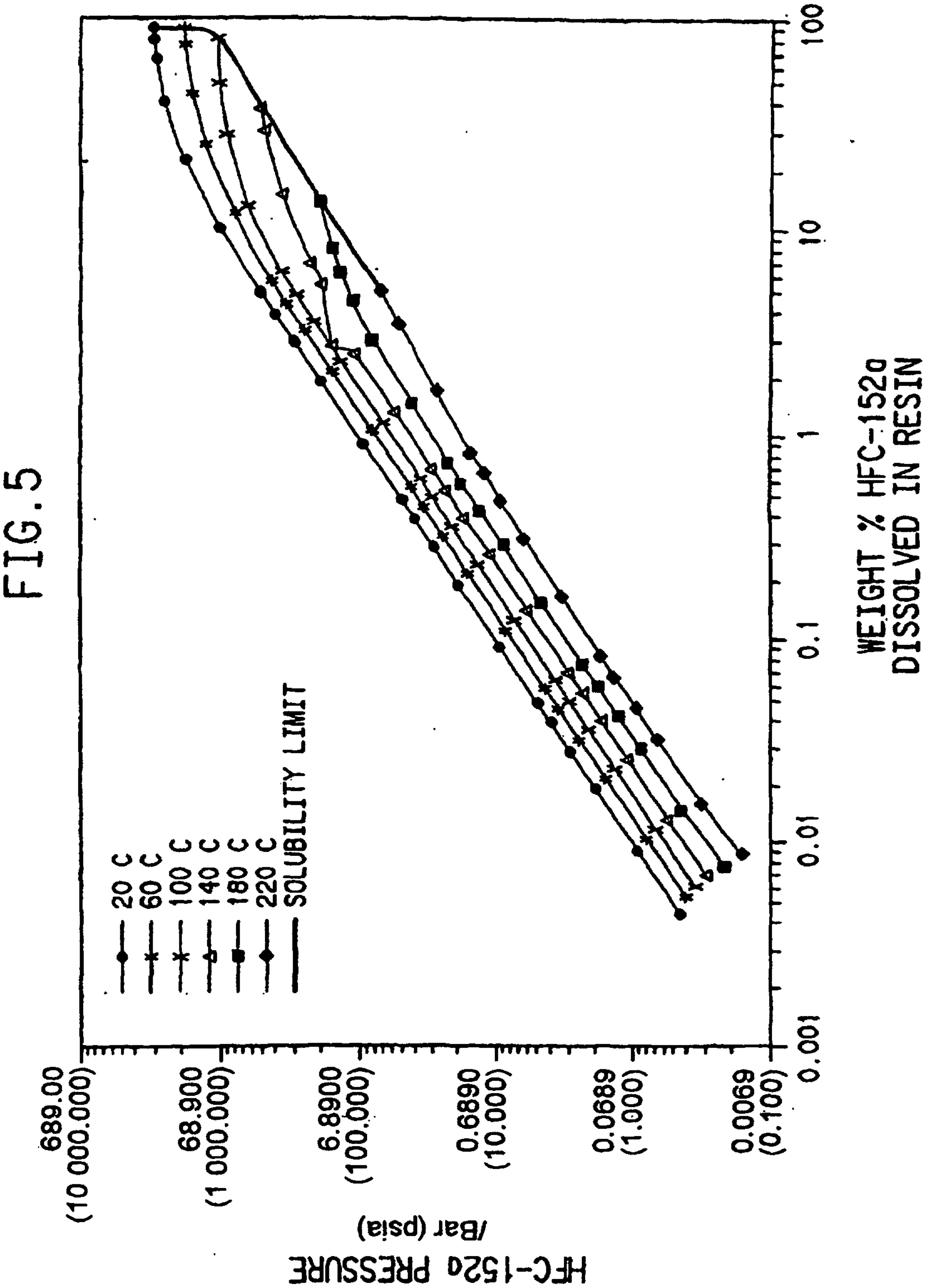
20 C
60 C
100 C
140 C
180 C
220 C
SOLUBILITY LIMIT
689.00 (10 000.000)
68.900 (1 000.000)
6.8900 (100.000)
0.6890 (10.000)
0.0689 (1.000)
0.0069 (0.100)
HFC-152a PRESSURE /Bar (psia)
0.001
0.01
0.1
1
10
100
WEIGHT % HFC-152a DISSOLVED IN RESIN

FIG.6

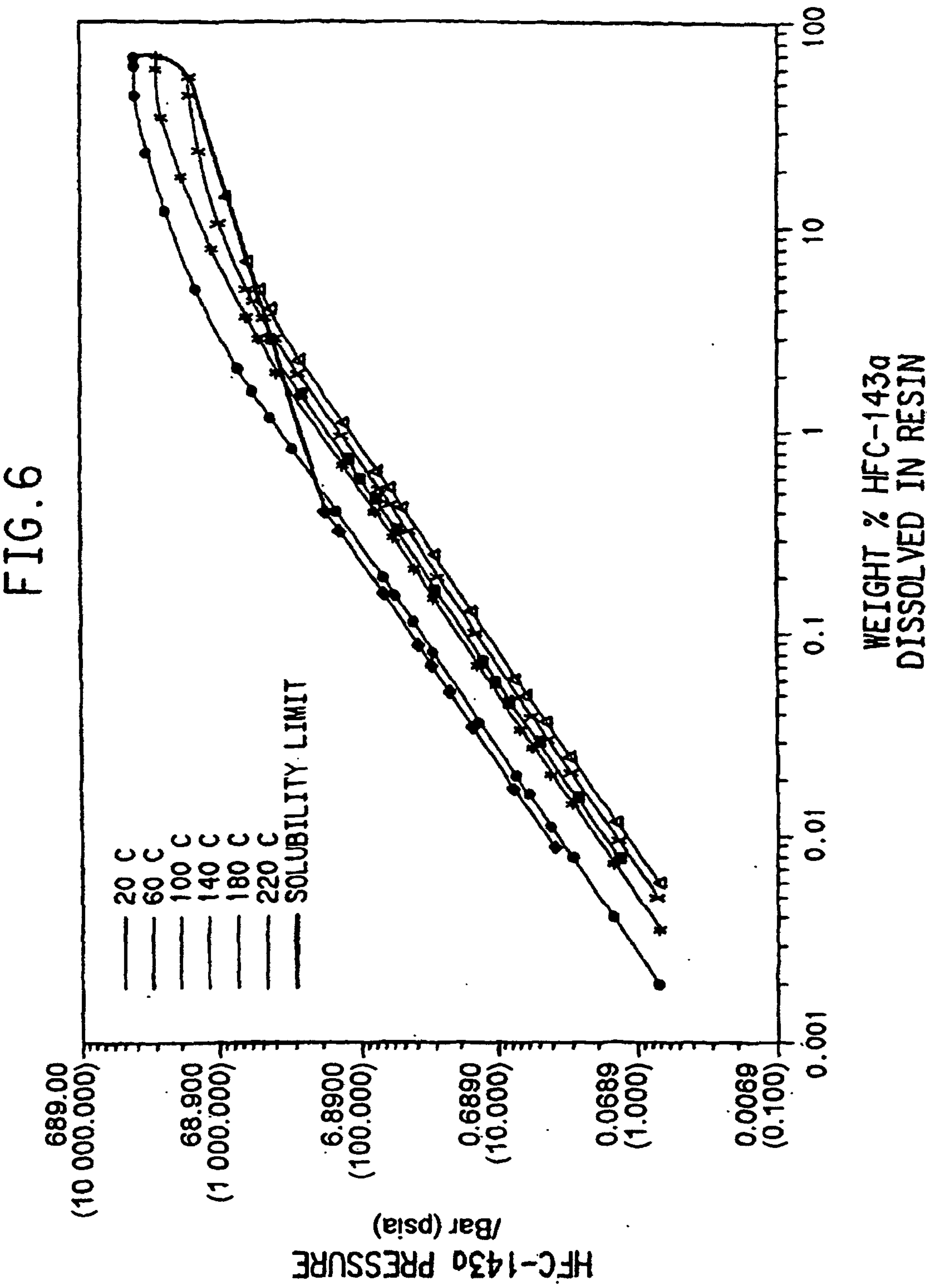
20 C
60 C
100 C
140 C
180 C
220 C
SOLUBILITY LIMIT
689.00 (10 000.000)
68.900 (1 000.000)
6.8900 (100.000)
0.6890 (10.000)
0.0689 (1.000)
0.0069 (0.100)
HFC-143a PRESSURE
/Bar (psia)
0.001
0.01
0.1
1
10
100
WEIGHT % HFC-143a
DISSOLVED IN RESIN